# EUROPÄISCHE PATENTSCHRIFT

(11) **EP 2 174 736 B1**
(45) Veröffentlichungstag und Bekanntmachung des Hinweises auf die Patenterteilung: **16.02.2011**
(21) Anmeldenummer: 08017632.4
(22) Anmeldetag: 08.10.2008
(51) Int. Cl.: B23B 31/30

(54) **Hydraulische Dehnspanneinrichtung**
Hydraulic tensile stress device
Dispositif de serrage extensible hydraulique

(43) Veröffentlichungstag der Anmeldung: 14.04.2010
(73) Patentinhaber: Schunk GmbH & Co. KG Spann- und Greiftechnik, 74348 Lauffen am Neckar (DE)
(72) Erfinder: Gross, Johann, 74081 Heilbronn (DE)
(74) Vertreter: Paul, Dieter-Alfred

(56) Entgegenhaltungen:
- EP-A- 0 074 332
- EP-A- 0 344 761
- EP-A- 1 090 704
- EP-A- 1 882 537

## Beschreibung

Die vorliegende Erfindung betrifft eine hydraulische Dehnspanneinrichtung mit einem Grundkörper und einer Dehnbüchse, die eine zentrale Aufnahme für ein zu spannendes Werkzeug bildet, und einer der Dehnbüchse zugeordneten Druckkammer, wobei in die Druckkammer ein Hydraulikmittelkanal mündet, an dessen von der Druckkammer fernen Seite ein Zylinderraum ausgebildet ist, welcher durch eine Spannschraube verschlossen ist, die in ein in dem Zylinderraum gehaltenes Einsatzelement eingeschraubt ist und durch Drehen nach innen verstellbar ist, um den Druck in der Druckkammer zu erhöhen und auf diese Weise die Dehnbüchse elastisch zu verformen, und wobei in dem Grundkörper ein zentraler Kühlmittelzuführkanal vorgesehen ist, der in die Aufnahme mündet, um einem Werkzeug während des Betriebs ein Kühl- und/oder Schmiermittel zuzuführen.

Hydraulische Dehnspanneinrichtungen dieser Art sind beispielsweise aus der EP 1 882 537 A1 bekannt und werden in erster Linie eingesetzt, um Werkzeuge oder Bauteile an der Arbeitsspindel einer entsprechenden Werkzeugmaschine zu fixieren. Die bekannten Dehnspanneinrichtungen besitzen einen formsteifen Futterkörper, in den eine Dehnbüchse unter Bildung einer zwischenliegenden Druckkammer eingesetzt ist. Die Dehnbüchse bildet dabei eine zentrale Aufnahme, in der ein zu spannendes Werkzeug fixiert werden kann, indem in der Druckkammer ein hydraulischer Druck aufgebaut und auf diese Weise die Wandung der Dehnbüchse elastisch nach innen verformt wird.

Bei den bekannten hydraulischen Dehnspanneinrichtungen ist der Druckraum über einen Hydraulikmittelzuführkanal mit einem Zylinderraum verbunden, in dem ein Kolben verschiebbar gehalten ist. Das offene Ende des Zylinderraums ist durch eine Spannschraube verschlossen, welche mit dem Kolben in Kontakt steht. Wenn der Druck innerhalb der Druckkammer erhöht werden soll, um die Dehnbüchse zum Spannen eines Bauteils zu verformen, wird die Spannschraube in den Zylinderraum gedreht. Dies hat zur Folge, dass der Kolben ebenfalls verschoben wird mit dem Ergebnis, dass das Hydraulikmittel, mit welchem der Druckraum, die Hydraulikmittelzuführleitung und der zylinderraum gefüllt sind, in Richtung des Druckraums verdrängt wird.

Um auch mit Werkzeugen arbeiten zu können, die mit einer sogenannten inneren Kühlmittelzufuhr versehen sind, weisen die bekannten Dehnspanneinrichtungen einen zentralen Kühlmittelzuführkanal auf, welcher sich von dem spindelseitigen Endbereich bis zur Aufnahme erstreckt und durch welchen ein Kühl- und/oder Schmiermittel von der Arbeitsspindel her dem gespannten Werkzeug zugeführt werden kann.

Die bekannten Dehnspanneinrichtungen haben sich in der Praxis durchaus bewertet. Es wird jedoch zum Teil als nachteilig empfunden, dass gerade bei den Spanneinrichtungen mit einem zentralen Kühlmittelzuführkanal der Dehnspannmechanismus relativ kompliziert ausgebildet ist und insbesondere auch die Baugröße im Vergleich zu Dehnspannrichtungen ohne einen solchen Kühlmittelzuführkanal vergrößert ist.

Es ist daher Aufgabe der vorliegenden Erfindung, eine hydraulische Dehnspanneinrichtung der eingangs genannten Art auszugeben, das einen kompakten und einfachen Aufbau besitzt.

Gemäß der vorliegenden Erfindung ist diese Aufgabe dadurch gelöst, dass der Zylinderraum radial in dem Grundkörper ausgebildet ist, der Zylinderraum und das Einsatzelement einen Ringraum zwischen sich ausbilden, und in diesen Ringraum insbesondere an einander diametral gegenüberliegenden Positionen Bohrungsabschnitte des Kühlmittelzuführkanals münden, die durch den Ringraum miteinander verbunden sind.

Der Erfindung liegt somit die Überlegung zugrunde, den Zylinderraum, in welchem der Kolben und das Einsatzelement gehalten sind, radial in dem Grundkörper auszubilden, um eine kompakte Bauform zu erhalten, und dabei den Zylinderraum als Teil des Kühlmittelzuführkanals auszugestalten. Dies wird erreicht, indem der Zylinderraum und das Einsatzelement zwischen sich einen Ringraum ausbilden, in welchen benachbarte Bohrungsabschnitte des Kühlmittelzuführkanals münden, die entsprechend durch den Ringraum miteinander verbunden sind.

Zur Bildung des Ringraums kann das Einsatzelement an seinem in den Grundkörper ragenden Endbereich einen geringeren Durchmesser als der korrespondierende Abschnitt des Zylinderraums aufweisen, so dass zwischen dem Einsatzelement und der Wandung des Zylinderraums der Ringraum ausgebildet wird. Alternativ oder zusätzlich kann auch der Zylinderraum im Bereich seines Ringraums einen Freistich besitzen.

Gemäß einer bevorzugten Ausführungsform der Erfindung ist vorgesehen, dass das Einsatzelement an seinem Außenumfang wenigstens eine Ringnut aufweist, in welcher ein Lötmaterial wie beispielsweise in der Form eines CU-Lötdrahtes untergebracht ist, und das Einsatzelement durch Hochtemperatutlöten in dem Grundkörper befestigt ist. Die Fixierung des Einsatzelements in dem Zylinderraum durch Hochtemperaturlöten hat den Vorteil, dass eine permanente und fluiddichte Verbindung zwischen dem Einsatzelement und dem Grundkörper auf einfache Weise hergestellt werden kann, indem der Grundkörper mit dem eingeschobenen Einsatzelement in einem Ofen platziert und erhitzt wird, bis das Lötmaterial in der Nut aufschmilzt.

In an sich bekannter Weise kann vorgesehen sein, dass in den Zylinderraum ein Kolben verschiebbar eingesetzt ist, welcher mit der Spannschraube wirkverbunden ist, so dass der Kolben durch die Drehung der Spannschraube unter Erhöhung des Drucks in der Druckkammer nach innen verschiebbar ist. In diesem Fall mündet der Hydraulikmittelzuführkanal zweckmäßigerweise in denjenigen Teil des Zylinderraums, in welchem der Kolben verschiebbar geführt ist. Hierdurch wird eine kompakte Ausbildung des Hydraulikmittelzuführkanals erreicht.

In Weiterbildung der Erfindung ist vorgesehen, dass die Dehnbüchse unter Bildung der Druckkammer von einem Ringelement umgeben ist, das an seinen axialen Endbereichen mit der Dehnbüchse und/oder dem Grundkörper verlötet ist. Dann kommunizieren die Druckkammer und der Hydraulikmittelzuführkanal, vorzugsweise durch einen Verbindungskanal miteinander, welcher zwischen der Dehnbüchse und dem Ringelement ausgebildet ist. Dabei liegt der Verbindungskanal zweckmäßigerweise auf der zur Druckkammer gelegenen Seite einer Verbindung zwischen dem Ringelement und dem Grundkörper bzw. der Dehnbüchse.

Hinsichtlich weiterer vorteilhafter Ausgestaltungen der Erfindung wird auf die Unteransprüche sowie die nachfolgende Beschreibung von zwei Ausführungsbeispielen unter Bezugnahme auf die beiliegende Zeichnung verwiesen. In der Zeichnung zeigt:
- Figur 1: eine Ausführungsform einer hydraulischen Dehnspanneinrichtung gemäß der vorliegenden Erfindung im Längsschnitt;
- Figur 2: eine weitere hydraulische Dehnspanneinrich- tung gemäß der vorliegenden Erfindung im Längsschnitt,
- Figur 3: die Dehnspanneinrichtung im Schnitt entlang der Linie C-C in Figur 2, und
- Figur 4: die Dehnspanneinrichtung im Schnitt entlang der Linie D-D in der Figur 2.

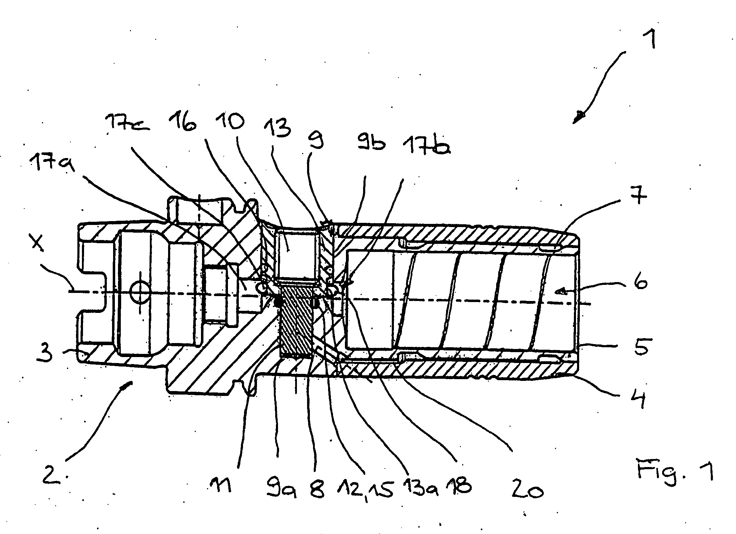

In der Figur 1 ist eine Ausführungsform einer hydraulischen Dehnspanneinrichtung 1 gemäß der vorliegenden Erfindung dargestellt, die insbesondere eingesetzt werden kann, um ein Werkzeug an der Arbeitsspindel einer entsprechenden Werkzeugmaschine zu fixieren. Die hydraulische Dehnspanneinrichtung 1 ist hier in der Form eines Dehnspannfutters ausgebildet und besitzt einen Grundkörper 2 aus einem formsteifen Material, der an seinem in der Figur 1 linken Endbereich in an sich bekannter Weise einen Befestigungskonus 3 zur Einspannung an einer drehangetriebenen Arbeitsspindel einer Werkzeugmaschine aufweist. An seinem anderen Ende ist der Grundkörper 2 als eine dünnwandige Dehnbüchse 5 ausgebildet, die innenseitig eine zentrale Aufnahme 6 definiert, in welcher der zylindrische Schaft eines Werkzeuges wie beispielsweise eines Bohrers oder eines Fräsers fixiert werden kann. Außenseitig ist die Dehnbüchse 5 von einem Ringelement 4 umgeben, das an seinen axialen Endbereichen mit der Dehnbüchse 5 bzw. am hinteren Endbereich auch mit dem Grundkörper 2 verlötet ist. Zwischen der Dehnbüchse 5 und dem Ringelement 4 ist ein eine Druckkammer 7 bildender Ringraum ausgebildet, welcher die Aufnahme 6 umgibt und koaxial zu dieser ausgerichtet ist. Die Druckkammer 7, deren axiale Länge etwa dem erforderlichen Spannbereich des Dehnspannfutters 1 entspricht, wird zur Aufnahme 6 hin von der relativ dünnen Wandung der Dehnbüchse 5 und radial nach außen von der Wandung des Ringelements 4, deren Wandstärke um ein mehrfaches größer als die Wandstärke der Innenwand ist, begrenzt.

Die Druckkammer 7 steht über einen Hydraulikmittelzuführkanal 8 mit einem im Grundkörper 2 ausgebildeten Zylinderraum 9 in Verbindung. Dabei ist in der Innenwandung des ersten axialen Zylinderraumabschnitts 9a eine Ringnut 15 ausgebildet, in welcher ein Dichtungsring 12 positioniert ist, um den Ringspalt zwischen dem Grundkörper 2 und dem Kolben 11 abzudichten. Um eine kompakte Bauform zu erhalten, mündet der Hydraulikmittelzuführkanal 8 an seinem einen Ende in den ersten Zylinderraumabschnitt 9a unterhalb des Dichtungrings 12 und an seinem anderen Ende in einen Verbindungskanal 20, welcher zwischen der Dehnhülse 5 und dem Ringelement 4 axial zwischen der Druckkammer 7 und der verbindungsstelle, an welcher das Ringelement 4 an dem Grundkörper 2 festgelötet ist, vorgesehen ist.

An seiner von der Druckkammer 7 fernen Seite ist der Zylinderraum 9 durch eine Spannschraube 10 verschlossen, die mit einem im Zylinderraum 9 verschiebbar gehaltenen Kolben 11 stirnseitig in Kontakt steht.

Die Druckkammer 7, der Hydraulikmittelzuführkanal 8 und der Zylinderraum 9 sind vollständig mit einem Hydraulikmittel gefüllt, welches unter Druckerhöhung in Richtung der Druckkammer 7 verdrängt wird, wenn die Spannschraube 10 in den Grundkörper 2 eingedreht und damit der Kolben 11 in den Zylinderraum 9 hineingedrückt wird.

Wie die Figur 1 gut erkennen lässt, besitzt der Zylinderraum 9, der radial zur Futterachse X ausgerichtet ist, zwei axiale Abschnitte 9a und 9b. Der innenliegende, erste Zylinderraumabschnitt 9a ist als Führungsabschnitt für den Kolben 11 ausgebildet und besitzt demgemäß einen dem Kolbendurchmesser entsprechenden Durchmesser. Die Durchmesser sind nach Art einer Gleitpaarung dimensioniert, wobei als Kolben 11 der Einfachheit halber ein zylinderstift, der kostengünstig als Normteil verfügbar ist, verwendet wird.

An den Führungsabschnitt 9a schließt sich außenseitig ein zweiter Zylinderraumabschnitt 9b an, der einen größeren Durchmesser als der Führungsabschnitt 9a besitzt. Der äußere Zylinderraumabschnitt 9b dient zur Aufnahme eines hülsenartig ausgebildeten Einsatzelements 13 mit einem Innengewinde, in welches die Spannschraube 10 eingeschraubt ist. Das Einsatzelement 13 liegt, wie in der Figur 1 gut erkennbar ist, an einer Schulter 14 an, welche zwischen den beiden Zylinderraumabschnitten 9a, 9b gebildet wird, und besitzt an ihrem in den Grundkörper 2 verweisenden Endabschnitt einen dem Kolbendurchmesser entsprechenden Innendurchmesser, so dass der Kolben 11 auch in dem Einsatzelement 13 geführt wird.

Das Einsatzelement 13 ist in dem Grundkörper 2 durch Hochtemperaturlöten befestigt. Hierzu weist das Einsatzelement 13 außenseitig eine Ringnut 16 auf, in welcher ein Lötmaterial in der Form eines CU-Lötdrahtes untergebracht ist. Bei der Fertigung wird das Einsatzelement 13 in den Zylinderraum 9 eingeschoben, bis es an der zwischen dem ersten und dem zweiten Zylinderraumabschnitt 9a, 9b gebildeten Schulter 14 anliegt, und dann in einem Ofen erhitzt, so dass das Lötmaterial schmilzt. Gleichzeitig kann auch eine Verlötung an der Planfläche der Schulter 14 erfolgen.

Erst nach dem Hochtemperaturlöten wird der Dichtungsring 12 durch das Einsatzelement 13 in die Ringnut 15 eingebracht, bevor der Kolben 11 in den inneren Zylinderraumabschnitt 9a eingeschoben und abschließend die Spannschraube 10 in das Einsatzelement 13 eingeschraubt wird.

Die erfindungsgemäße Dehnspanneinrichtung ist für das Spannen von Werkzeugen mit einer inneren Kühlmittelzufuhr ausgebildet und besitzt entsprechend einen zentralen Kühlmittelzuführkanal 17. Dieser weist zwei Bohrungsabschnitte 17a, 17b auf, die von dem linken Endbereich des Grundkörpers 2 und von der Aufnahme 6 her in den Grundkörper 2 eingebracht sind und in den unteren Endbereich des zweiten Zylinderraumabschnitts 9b münden. Wie in der Figur 1 gut erkennbar ist, ist der zweite zylinderraumabschnitt 9b in diesem unteren Endbereich mit einem Freistich 18 versehen und besitzt des weiteren das Einsatzelement 13 an diesem Endbereich einen verringerten Durchmesser, so dass zwischen dem Grundkörper 2 und dem Einsatzelement 13 ein Ringraum 17c gebildet wird, durch welchen die beiden Bohrungsabschnitte 17a, 17b miteinander verbunden sind. Im Betrieb wird somit von einer Arbeitsspindel her zugeführtes Kühl- und/oder Schmiermittel durch den ersten Bohrungsabschnitt 17a und dann durch den Ringraum 17c um das Einsatzelement 13 herum zum zweiten Bohrungsabschnitt 17b und von dort weiter zu der Aufnahme 6 geführt.

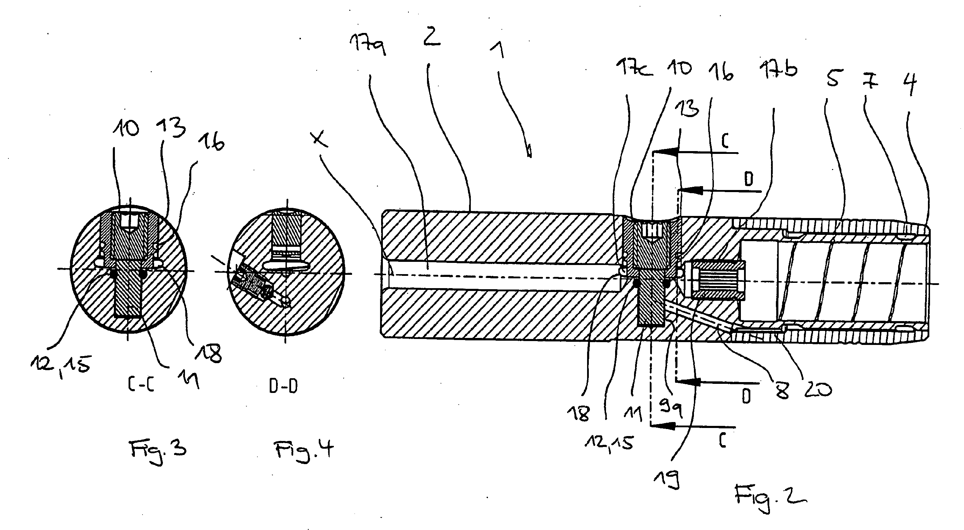

In den Figuren 2 bis 4 ist eine weitere Ausführungsform einer erfindungsgemäßen hydraulischen Dehnspanneinrichtung 1 dargestellt. Diese besitzt prinzipiell den gleichen Grundaufbau wie die hydraulische Dehnspanneinrichtung 1, welche zuvor erläutert wurde. Der wesentliche Unterschied besteht darin, dass die Dehnspanneinrichtung 1 nicht als Dehnspannfutter ausgebildet, welches unmittelbar an einer Arbeitsspindel befestigt wird. Entsprechend ist der in Figur 2 linke Endbereich nicht als Befestigungskonus, sondern zur Einspannung beispielsweise in einer weiteren Dehnspanneinrichtung zylindrisch ausgebildet. Dabei erstreckt sich auch der erste Bohrungsabschnitt 17a des Kühlmittelzuführkanals 17 vom linken Ende des Grundkörpers 2 bis zu dem radialen Zylinderraum 9, in welchen das Einsatzelement 13 unter Bildung des Ringraums 17c eingefügt ist. Des weiteren ist der zweite Bohrungsabschnitt 17b als Gewindebohrung ausgebildet, in welche ein Anschlagelement 19 eingeschraubt ist. Das Anschlagelement 19 ist hülsenartig ausgebildet und kann durch Verdrehen axial verstellt werden.

Im Übrigen entspricht die in den Figuren 2 bis 4 dargestellte zweite Ausführungsform der erfindungsgemäßen Dehnspanneinrichtung der in Figur 1 dargestellten Ausführungsform, so dass auf die entsprechenden Erläuterungen zur Vermeidung von Wiederholungen verwiesen wird.

## Patentansprüche

1. Hydraulische Dehnspanneinrichtung mit einem Grundkörper (2) und einer Dehnbüchse (5), die eine zentrale Aufnahme (6) für ein zu spannendes Werkzeug bildet, und einer der Dehnbüchse (5) zugeordneten Druckkammer (7), wobei in die Druckkammer (7) ein Hydraulikmittelkanal (8) mündet, an dessen von der Druckkammer (7) fernen Seite ein Zylinderraum (9) ausgebildet ist, welcher durch eine Spannschraube (10) verschlossen ist, die in ein in dem Zylinderraum (9) gehaltenes Einsatzelement (13) eingeschraubt ist und durch Drehen nach innen verstellbar ist, um .den Druck in der Druckkammer (7) zu erhöhen und auf diese Weise die Dehnbüchse (5) elastisch zu verformen, und wobei in dem Grundkörper (2) ein zentraler Kühlmittelzuführkanal (17) vorgesehen ist, der in die Aufnahme (6) mündet, um einem Werkzeug während des Betriebs ein Kühl- und/oder Schmiermittel zuzuführen, **dadurch gekennzeichnet, dass** der Zylinderraum (9) radial in dem Grundkörper (2) ausgebildet ist, der Zylinderraum (9) und das Einsatzelement (13) einen Ringraum (17c) zwischen sich ausbilden, und in diesen Ringraum (17c) insbesondere an diametral gegenüberliegenden Positionen Bohrungsabschnitte (17a, 17b) des Kühlmittelzuführkanals (17) münden, die durch den Ringraum (17c) miteinander verbunden sind.

2. Hydraulische Dehnspanneinrichtung nach Anspruch 1, **dadurch gekennzeichnet, dass** das Einsatzelement (13) an seinem in den Grundkörper (2) ragenden Endbereich einen geringeren Durchmesser als der korrespondierende Abschnitt (9b) des Zylinderraums (9) aufweist, so dass zwischen dem Einsatzelement (13) und der Zylinderraumwand der Ringraum (17c) gebildet wird.

3. Hydraulische Dehnspanneinrichtung nach Anspruch 1 oder 2, **dadurch gekennzeichnet, dass** der Zylinderraum (9) im Bereich des Ringraums (17c) einen Freistich (18) aufweist.

4. Hydraulische Dehnspanneinrichtung nach Anspruch 1 oder 2, **dadurch gekennzeichnet, dass** das Einsatzelement (13) an seinem Außenumfang wenigstens eine Ringnut (16) aufweist, in welcher ein Lötmaterial untergebracht ist, und das Einsatzelement (13) durch Hochtemperaturlöten im Grundkörper (2) befestigt ist.

5. Hydraulische Dehnspanneinrichtung nach einem der vorhergehenden Ansprüche, **dadurch gekennzeichnet, dass** in den Zylinderraum (9) ein Kolben (11) verschiebbar eingesetzt ist, welcher mit der Spannschraube (10) wirkverbunden ist, so dass der Kolben (11) durch die Drehung der Spannschraube (10) unter Erhöhung des Drucks in der Druckkammer (7) nach innen verschiebbar ist.

6. Hydraulische Dehnspanneinrichtung nach Anspruch 4, **dadurch gekennzeichnet, dass** der Hydraulikmittelzuführkanal (8) in denjenigen Teil (9a) des Zylinderraums (9) mündet, in welchem der Kolben (11) verschiebbar geführt ist.

7. Hydraulische Dehnspanneinrichtung nach einem der vorherigen Ansprüche, **dadurch gekennzeichnet, dass** die Dehnbüchse (5) unter Bildung der Druckkammer (7) von einem Ringelement (4) umgeben ist, das an seinen axialen Endbereichen mit der Dehnbüchse (5) und/oder dem Grundkörper (2) verlötet ist.

8. Hydraulische Dehnspanneinrichtung nach Anspruch 7, **dadurch gekennzeichnet, dass** die Druckkammer (7) und der Hydraulikmittelzuführkanal (8) durch einen Verbindungskanal miteinander kommunizieren, welcher zwischen der Dehnbüchse (5) und dem Ringelement (4) ausgebildet ist.

## Claims

1. Hydraulic expansion chucking device comprising a base body (2) and an expansion sleeve (5), which forms a central receptacle (6) for a tool to be clamped, and a pressure chamber (7) associated to the expansion sleeve (5), wherein a hydraulic medium channel (8) discharges into the pressure chamber (7), which at its side facing away from the pressure chamber (7) is formed as a cylinder space (9) closed by a tension screw (10), which is screwed into an insert element (13) held in the cylinder space (9) and can be displaced inwardly by turning it for increasing the pressure in the pressure chamber (7) and in this way is elastically deforming the expansion sleeve (5), and wherein a central cooling medium supply channel (17) is provided in the base body (2), that discharges into the receptacle (6) for supplying to a tool during operation a cooling and/or lubricating medium, **characterized in that** the cylinder space (9) is provided radial in the base body (2), the cylinder space (9) and the insert element (13) form therebetween an annular space (17c), and bore sections (17a, 17b) of the cooling medium supply channel (17) discharge into this annular space (17c) in particular on diametrically opposite positions, which are connected by the annular space (17c).

2. Hydraulic expansion chucking device according to claim 1, **characterized in that** the insert element (13) has at its end section extending into the base body (2) a smaller diameter than the corresponding section (9b) of the cylinder space (9), so that the annular space (17c) is formed between the insert element (13) and the cylinder space wall.

3. Hydraulic expansion chucking device according to claim 1 or 2, **characterized in that** the cylinder space (9) has an undercut (18) in the region of the ring space (17c).

4. Hydraulic expansion chucking device according to claim 1 or 2, **characterized in that** the insert element (13) is provided at its outer circumference with at least one annular groove (16), in which a soldering material is accommodated, and that the insert element (13) is fixed in the base body (2) by high temperature soldering.

5. Hydraulic expansion chucking device according to any preceding claim, **characterized in that** a piston (11) is slideably arranged in the cylinder space (9), which is cooperatively connected with the tension screw (10), so that the piston (11) can be displaced inwardly by turning the tension screw (10) for increasing the pressure in the pressure chamber (7).

6. Hydraulic expansion chucking device according to claim 4, **characterized in that** the hydraulic medium supply channel (8) discharges into the part (9a) of the cylinder space (9), in which the piston (7) is slideably guided.

7. Hydraulic expansion chucking device according to any preceding claim, **characterized in that** the expansion sleeve (5) is surrounded by annular element (4) forming the pressure chamber (7), the annular element (4) being soldered at its axial end regions with the expansion sleeve (5) and/or the base body (2).

8. Hydraulic expansion chucking device according to claim 7, **characterized in that** the pressure chamber (7) and the hydraulic medium supply channel (8) communicate by means of a connection channel, that is formed between the expansion sleeve (5) and the annular element (4).

## Revendications

1. Dispositif de serrage expansible hydraulique avec un corps principal (2) et une douille expansible (5), qui forme une logement centrale (6) pour un outil à serrer et une chambre de pression (7) placée associée à la douille expansible (5) sachant qu'un canal de fluide hydraulique (8) débouche dans la chambre de pression (7), lequel est formé sur le côté éloigné de la chambre de pression (7) comme un espace cylindrique (9), lequel est fermé par une vis de serrage (10), qui est serrée dans un élément d'insertion (13) maintenu dans l'espace cylindrique (9) et qui est ajustable par rotation vers l'intérieur, pour élever la pression dans la chambre de pression (7) et de cette manière provoquer la déformation élastique de la douille expansible (5) et sachant que dans le corps principal (2) un canal central de distribution de fluide de refroidissement (17) est prévu, qui débouche sur le logement (6), pour conduire durant le fonctionnement un agent de refroidissement et/ou lubrifiant vers l'outil, **caractérisé en ce que** l'espace cylindrique (9) est prévu radialement dans le corps principal (2), l'espace cylindrique (9) et l'élément d'insertion (13) forment un espace annulaire (17c) entre eux, et particulièrement sur des positions diamétralement opposées, des sections alésées (17a, 17b) du canal de distribution du fluide refroidissement (17) débouchent dans cet espace annulaire (17c), qui sont liées entre elles par l'intermédiaire de l'espace annulaire (17c).

2. Dispositif de serrage expansible hydraulique selon revendication 1, **caractérisé en ce que** l'élément d'insertion (13) présente sur son extrémité émergente dans le corps principal (2) un diamètre inférieur à la section correspondante (9b) de l'espace cylindrique (9), de telle manière qu'entre l'élément d'insertion (13) et la paroi de l'espace cylindrique, l'espace annulaire (17c) soit formé.

3. Dispositif de serrage expansible hydraulique selon la revendication 1 ou 2, **caractérisé en ce que** l'espace cylindrique (9) présente un dégagement (18) dans la zone de l'espace annulaire (17c).

4. Dispositif de serrage expansible hydraulique selon revendication 1 ou 2, **caractérisé en ce que** l'élément d'insertion (13) présente au moins une rainure circulaire (16) sur sa circonférence extérieure, dans laquelle un matériel de brasage est placé et l'élément d'insertion (13) est fixé par brasage à haute température dans le corps principal (2).

5. Dispositif de serrage expansible hydraulique selon l'une des revendications précédentes, **caractérisé en ce que** dans l'espace cylindrique (9) un piston (11) est inséré de manière coulissante, lequel est uni de manière fonctionnelle avec la vis de serrage (10), de telle manière que le piston (11) peut être déplacé vers l'intérieur par rotation de la vis de serrage (10) sous augmentation de la pression dans la chambre de pression (7).

6. Dispositif de serrage expansible hydraulique selon revendication 4, **caractérisé en ce que** le canal de distribution de fluide hydraulique (8) débouche dans la partie (9a) de l'espace cylindrique (9) dans laquelle le piston (11) est dirigé de manière coulissante.

7. Dispositif de serrage expansible hydraulique selon l'une des revendications précédentes, **caractérisé en ce que** la douille expansible (5), sous formation de la chambre de pression (7), est entourée d'un élément annulaire (4) qui est soudé sur son extrémité axiale avec la douille expansible (5) et/ou le corps principal (2).

8. Dispositif de serrage expansible selon revendication 7, **caractérisé en ce que** la chambre de pression (7) et le canal de distribution de fluide hydraulique (8) communiquent entre eux par l'intermédiaire d'un canal de liaison, lequel est conçu entre la douille expansible (5) et l'élément annulaire (4).
